**Europäisches Patentamt**

**European Patent Office**

**Office européen des brevets**

(19)

(11) Numéro de publication: **0 094 888**
**B1**

(12)

# FASCICULE DE BREVET EUROPEEN

(45) Date de publication du fascicule du brevet:
**27.08.86**

(51) Int. Cl.⁴: **B 65 B 51/14**, B 65 D 5/06

(21) Numéro de dépôt: **83400977.1**

(22) Date de dépôt: **16.05.83**

(54) **Procédé pour rendre étanches des emballages constitués par un complexe stratifié.**

(30) Priorité: **17.05.82 FR 8208559**

(43) Date de publication de la demande:
**23.11.83 Bulletin 83/47**

(45) Mention de la délivrance du brevet:
**27.08.86 Bulletin 86/35**

(84) Etats contractants désignés:
**CH DE GB IT LI**

(56) Documents cités:
**FR - A - 1 586 332**
**US - A - 2 437 057**

(73) Titulaire: **ELOPAK FRANCE, 3-5 rue de Metz,
F-75010 Paris (FR)**

(72) Inventeur: **Camou, Jean-Paul, 97, avenue de
Saint-Mesnin, F-45100 Orleans (FR)**

(74) Mandataire: **Madeuf, Claude Alexandre Jean et al,
CABINET MADEUF 3, avenue Bugeaud, F-75116 Paris
(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne les emballages utilisés en particulier pour les produits alimentaires liquides qui sont fabriqués à partir de feuilles de carton imprégnées sur leurs deux faces de résine thermoplastique et de façon plus générale les emballages fabriqués à partir de complexes stratifiés pouvant comporter aussi des feuilles d'aluminium ainsi que différents types de résine synthétique, ces complexes stratifiés permettant d'assurer une étanchéité suffisante pour conserver, pendant des durées longues, des produits tels que le lait, les jus de fruits, le vin, etc.

Dans la technique, les emballages en complexe stratifié sont fabriqués à partir de feuilles continues qui sont tout d'abord découpées puis pliées pour former une ébauche de section rectangulaire, de préférence carrée, dont le fond et le haut sont ultérieurement pliés puis assemblés par soudure de la feuille ou du revêtement thermoplastique interne.

Il est apparu que des fuites se produisent dans les parties soudées en particulier à la jonction de parties d'épaisseur différente car des trajets de fuite, même capillaires, ne peuvent pas toujours être éliminés dans les modes de fabrication actuels.

Des moyens pour éliminer tout interstice ont été proposés par le FR-A 1 586 332 pour le type d'emballage visé dans ce qui précède et dont les deux faces sont revêtues de résine thermoplastique destinée à être partiellement fondue pour assurer la fermeture des plis délimitant le fond et le dessus. En particulier, la partie supérieure de l'emballage devant former un bec verseur est soudée à la chaleur tout en étant pressée afin de faire fluer de la résine dans une zone de joint.

Le US-A 2 437 057 préconise aussi de faire fluer la matière thermoplastique recouvrant les faces internes d'un emballage dans une direction spécifiée par utilisation de nervures dans des machines de soudage.

Il est apparu cependant que les zones à souder présentent le plus souvent plusieurs épaisseurs de matière de sorte que les moyens mis en œuvre jusqu'à présent provoquent des suppressions nuisibles pour la matière de base des emballages ou que des pressions insuffisantes soient exercées en d'autres endroits ce qui conduit à une mauvaise répartition de la résine thermoplastique pendant sa fusion.

L'invention résout ce problème en permettant de réaliser des emballages parfaitement étanches et donc aptes à contenir des produits fragiles tels que les jus de fruits, le vin et autres liquides alimentaires.

Conformément à l'invention, le procédé pour rendre étanches des emballages constitués par un complexe stratifié comportant au moins deux couches de matière thermoplastique prévues de part et d'autre d'une feuille de carton tout d'abord pliée pour former une ébauche puis repliée à ses extrémités pour délimiter un fond et un haut ouvrant comportant plusieurs épaisseurs de carton imprégnées superposées, caractérisé en ce qu'on fait fluer par application de chaleur et de pression une partie de la matière thermoplastique recouvrant la face interne du carton de manière que cette matière remplisse les espaces laissés vides à l'extrémité des parties de carton superposées, le fluage étant provoqué au moyen de nervures prévues dans des mâchoires de soudage provoquant le soudage des parties pliées de carton qui sont en contact les unes avec les autres, les mâchoires assurant le soudage et l'emboutissage étant, de plus, conformées pour correspondre aux épaisseurs variables délimitées par le nombre de couches superposées de carton plié.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une perspective schématique en partie arrachée d'un emballage faisant application de l'invention.

La fig. 2 est une vue en plan de l'emballage lorsque sa partie supérieure est complètement ouverte.

La fig. 3 est une vue en plan analogue à la fig. 2 montrant le début du pliage menant à la fermeture de la partie supérieure de l'emballage.

La fig. 4 est une perspective partielle de la partie supérieure de l'emballage plié dont l'un des côtés est arraché.

La fig. 5 est une perspective, analogue à la fig. 4, mais sans arrachement.

La fig. 6 est une coupe schématique vue suivant la ligne VI–VI de la fig. 5.

La fig. 7 est une coupe schématique vue suivant la ligne VII–VII de la fig. 5.

La fig. 8 est une perspective, analogue aux fig. 4 et 5, mais après exécution d'une opération de scellage.

La fig. 9 est une élévation explicative illustrant un des effets de l'opération de scellage.

La fig. 10 est une coupe suivant la ligne X–X de la fig. 8.

L'emballage auquel se réfère l'invention est du type dit en carton dont la section est rectangulaire et, de préférence, carrée. Par carton, on doit comprendre un complexe stratifié comprenant par exemple une couche de polyéthylène 1 enduisant la face externe d'une feuille de carton 2 elle-même revêtue intérieurement d'une seconde couche de polyéthylène 3, et d'une feuille d'aluminium 4 recouverte, à son tour, d'une troisième couche de polyéthylène 5. Dans certains cas, la couche d'aluminium peut être omise ou, au contraire, dans d'autre cas, par exemple une couche supplémentaire d'une résine thermoplastique peut être prévue notamment lorsque le complexe stratifié doit présenter des qualités d'étanchéité particulières. La nature des matières rappelées ci-dessus l'est uniquement également à titre d'exemple.

Comme cela est connu dans la technique, l'emballage est fabriqué à partir d'une feuille continue qui est coupée puis tout d'abord pliée pour former une ébauche tubulaire dont les deux bords extrêmes 6 et 7 sont plaqués ensemble au niveau d'un angle de l'ébauche puis soudés sur toute leur longueur entre des électrodes de soudage chauffées amenant le polyéthylène ou autre matière thermoplastique à fondre.

L'ébauche préparée est ensuite, toujours de façon bien connue, pré-pliée à ses extrémités tant dans la partie devant former le fond 8 de l'emballage que dans la partie devant former le haut 9 de celui-ci. L'invention est décrite ci-après plus particulièrement pour la partie du haut 9. Cette partie comporte sur deux côtés de l'ébauche deux lèvres 10 et 11 faisant saillie par rapport aux bords supérieurs 13, 14 des deux autres côtés de l'ébauche.

Pour faciliter les explications qui suivent et bien que les côtés de l'emballage soient en fait identiques, on désigne par 15, 16 les côtés frontaux et par 17, 18 les côtés latéraux.

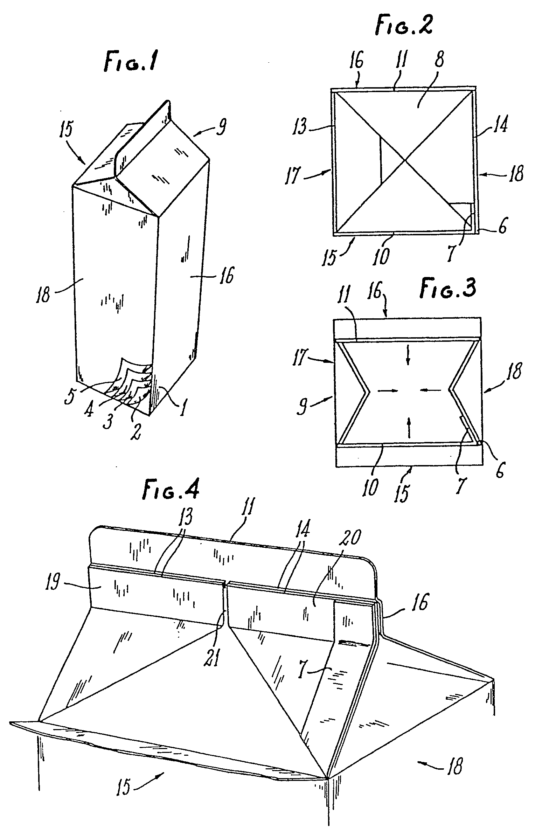

Les parties supérieures des côtés latéraux 17, 18 sont pré-pliées puis progressivement pliées comme illustré par les flèches de la fig. 3, ce qui a pour effet de rapprocher les lèvres 10, 11 en même temps que la partie supérieure desdits côtés 17, 18 qui forment alors des rubans 19, 20.

Les rubans 19 et 20 sont respectivement formés par deux plis superposés et ces deux plis comportent de part et d'autre l'épaisseur de carton des côtés frontaux 15 et 16, c'est-à-dire qu'il y a au niveau des rubans 19, 20 quatre épaisseurs de carton et même cinq épaisseurs au niveau du bord extrême 7, c'est-à-dire sur une petite largeur du côté frontal 15.

Le bord inférieur interne des rubans 19, 20 communique avec l'intérieur de l'emballage. De même, l'intérieur de l'emballage communique avec l'espace vertical 21 qui sépare les extrémités des rubans 20, 21. Par ailleurs, les lèvres 10, 11 qui sont accolées formant avec les bords supérieures 13, 14 des rubans 19, 20 et un espace 22 tendant à former un trajet de fuite. Cet espace 22 est élargi en 22a au niveau de la partie supérieure du bord extrême 7.

Comme cela ressort de la description qui précède, le pliage rappelé ci-dessus a pour effet que toutes les parties de l'emballage qui sont amenées en contact les unes avec les autres, par exemple les deux lèvres 10, 11 les deux jeux de rubans 19 et 20 respectivement, etc., sont des faces qui sont recouvertes d'une couche de polyéthylène ou autre matière plastique fusible.

Pour assurer une fermeture parfaitement étanche, on prévoit des mâchoires de soudage 24, 25 dont les parties de travail sont conformées de façon complémentaire aux parties venant en contact avec l'emballage, c'est-à-dire que les parties 24a, 25a des mâchoires sont plus rapprochées que les parties 24b, 25b. En effet, il existe seulement deux épaisseurs de carton au niveau des lèvres 10, 11 et quatre au niveau des rubans 19, 20. En outre, une cinquième épaisseur de carton existe au niveau du bord extrême 7. La mâchoire 24 comporte, dans cette zone, une partie 24b plus en retrait que la partie 24a. On est assuré de cette manière qu'une pression et une transmission de chaleur uniforme sont transmises aux différentes parties à souder.

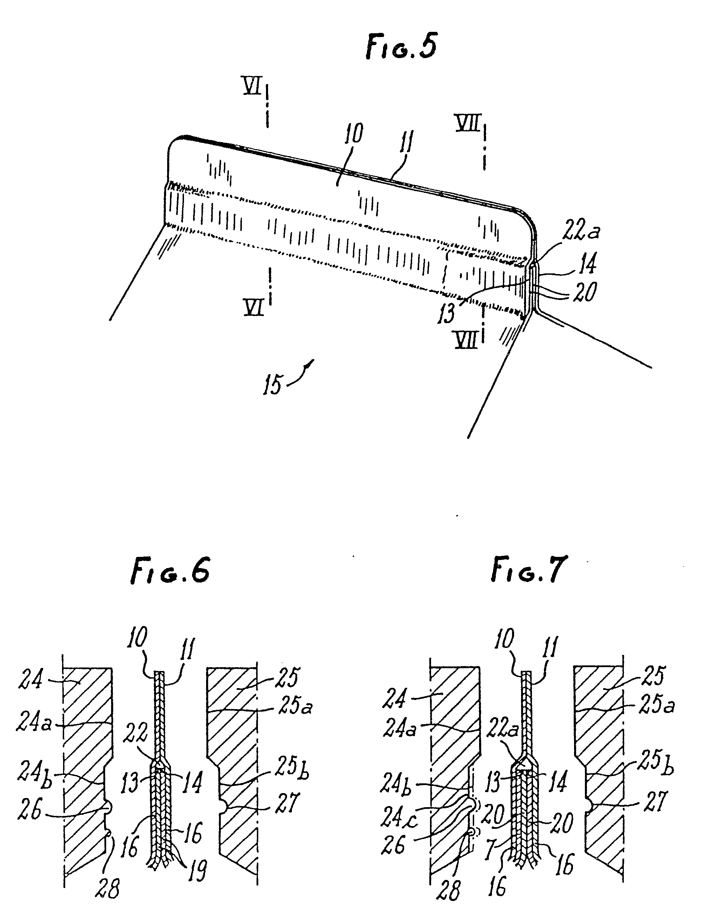

Supplémentairement, la mâchoire 24 comporte, en regard de la partie formant les rubans 19 et 20 une nervure longitudinale 26 qui correspond à une rainure 27 prévue dans la mâchoire 25. Les nervures 26 et 27 s'étendent tout le long des mâchoires pour assurer un emboutissage de toute la zone comportant les rubans 19 et 20. Supplémentairement, des barrettes 28 sont respectivement prévues dans la mâchoire 24 et la mâchoire 25 pour travailler de part et d'autre de l'espace 21 lors du rapprochement des mâchoires (fig. 6, 7, 8 et 9).

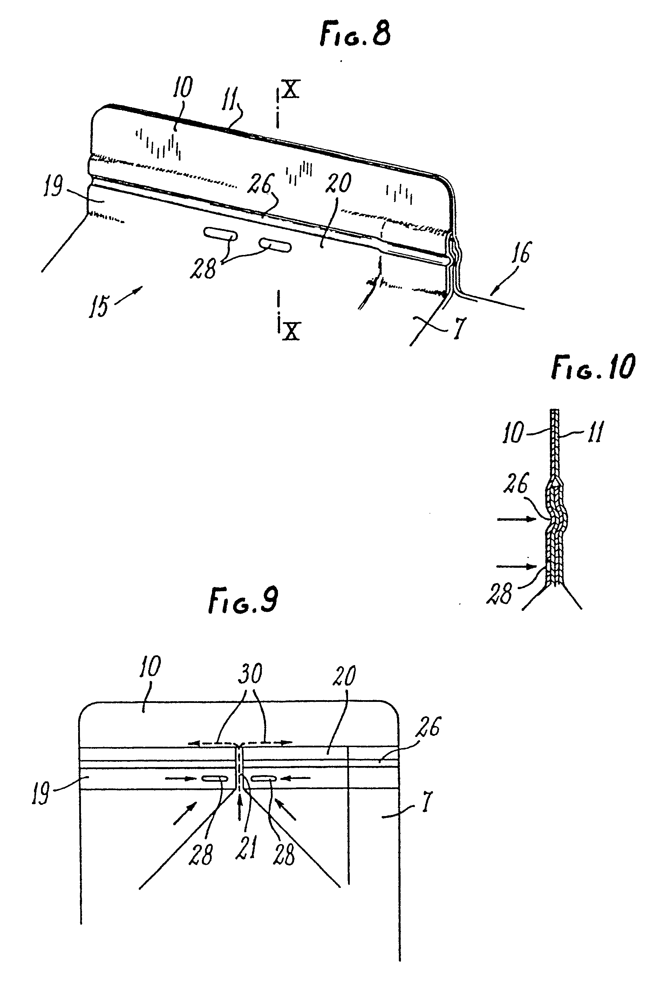

L'action d'emboutissage et de chauffage des nervures et barrettes ci-dessus a pour effet d'amener le polyéthylène à l'état de fusion et de le repousser par fluage dans l'espace 21 puis au-delà de celui-ci dans les espaces 22 et 22a comme illustré par les flèches 30 à la fig. 9.

L'espace vertical 21 étant rempli de matière thermoplastique et au moins une partie des espaces 22, 22a étant elle-même remplie, il ne peut plus exister de trajet de fuite puisque, par ailleurs, l'embouti formé par la nervure 26 et la rainure 27 s'étend sur toute la largeur de l'emballage, cet embouti ayant pour effet de tendre aussi à faire fluer la matière plastique dans les espaces 22, 22a dans lesquels cette matière est également refoulée par la pression appliquée au moyen des parties 24a, 25a des mâchoires agissant sur les lèvres 10, 11.

## Revendications

1. Procédé pour rendre étanches des emballages constitués par un complexe stratifié comportant au moins deux couches de matière thermoplastique (1, 3) prévues de part et d'autre d'une feuille de carton (2) tout d'abord pliée pour former une ébauche puis repliée à ses extrémités pour délimiter un fond (8) et un haut ouvrant (9) comportant plusieurs épaisseurs de carton imprégnées superposées, caractérisé en ce qu'on fait fluer par application de chaleur et de pression une partie de la matière thermoplastique recouvrant la face interne du carton de manière que cette matière remplisse les espaces laissés vides à l'extrémité des parties de carton superposées, le fluage étant provoqué au moyen de nervures (26, 28) prévues dans des mâchoires de soudage (24, 25) provoquant le soudage des parties pliées de carton qui sont en contact les unes avec les autres, les mâchoires (24, 25) assurant le soudage et l'emboutissage étant, de plus, conformés pour correspondre aux épaisseurs variables délimités par le nombre de couches superposées de carton plié.

2. Procédé suivant la revendication 1, caractérisé en ce que les parties à plus grand nombre de couches de carton superposées sont embouties par les mâchoires de soudage avant et pendant que celles-ci exercent la pression de soudage.

3. Procédé suivant l'une des revendications 1 et 2, caractérisé en ce que, dans le mode de pliage de la partie haute (9) dans laquelle deux côtés (17, 18) sont pliés en V pour être rapprochés jusqu'à venir pratiquement en contact en délimitant deux jeux de deux rubans (19, 20) alignés, on prévoit, d'une part, d'emboutir les deux rubans alignés (19, 20) sur toute leur longueur et, d'autre part, de poinçonner au moyen de barrettes (28) les parties voisines des jeux de deux rubans, le poinçonnage étant effectué à proximité de l'espace (21) séparant l'extrémité des rubans de manière à faire fluer de la résine thermoplastique dans cet espace ainsi que dans un espace (22, 22a) formé au-dessus du bord terminal desdits rubans en dessous de deux lèvres (10, 11) réunies délimitées par les côtés frontaux de l'emballage.

4. Procédé suivant l'une des revendications 1 à 3, caractérisé en ce qu'il est mis en œuvre avec un complexe stratifié comportant en succession une couche de résine thermoplastique (1), une couche de carton (2), une couche de résine thermoplastique (3), une couche de métal (4) et une couche de résine thermoplastique (5).

5. Procédé suivant l'une des revendications 1 à 4, caractérisé en ce que les couches de résine thermoplastiques sont en résine polyéthylène.

6. Procédé suivant l'une des revendications 1 à 5, caractérisé en ce que la couche métallique est de l'aluminium.

7. Procédé suivant l'une des revendications 1 à 6, caractérisé en ce qu'il est prévu simultanément au moins une couche de résine à étanchéité très élevée.

## Claims

1. Method for the air-tight closing of packages made of multilayer material comprising at least two layers of thermoplastic material (1, 3) provided on both sides of a cardboard sheet (2) which is first of all folded to form a blank, and then folded back at its ends for delimiting a bottom portion (8) and an opening top portion (9) comprising a plurality of superimposed impregnated cardboard thicknesses, characterized in that a part of the thermoplastic material coating the inner face of the cardboard is made to flow by applying heat and pressure so that this material will fill the intervals let free at the end of the superimposed cardboard parts, flowing being caused by means of ribs (26, 28) provided in soldering jaws (24, 25) causing a soldering of the folded parts of cardboard which are in contact together, the jaws (24, 25) causing a soldering and a stamping being, moreover, so shaped as to correspond to the variable thicknesses delimited by the number of superimposed layers of folded cardboard.

2. Method according to claim 1, characterized in that the parts having the greatest number of superimposed cardboard layers are stamped by means of the soldering jaws before and when the latter exert the soldering pressure.

3. Method according to one of claims 1 and 2, characterized in that, in the folding mode of the upper part (9) in which two sides (17, 18) are V-bent to be brought close together up to come practically into contact by delimiting two sets of two aligned bands (19, 20), there is provided, on the one end, to stamp the two aligned bands (19, 20) on their all length and, on the other end, to punch by means of small bars (28) the adjacent parts of the sets of two bands, punching being made at the vicinity of the interval (21) separating the end of the bands in order to make the thermoplastic resin to flow in this interval as well as in an interval (22, 22a) formed above the end edge of said bands under two connected lips (10, 11) delimited by the front sides of the package.

4. Method according to one of claims 1 to 3, characterized in that it is embodied with a multilayer material comprising in succession: a layer of thermoplastic resin (1), a layer of cardboard (2), a layer of thermoplastic resin (3), a layer of metal (4) and a layer of thermoplastic resin (5).

5. Method according to one of claims 1 to 4, characterized in that the layers of thermoplastic resin are in polyethylene resin.

6. Method according to one of claims 1 to 5, characterized in that the metal layer is in aluminium.

7. Method according to one of claims 1 to 6, characterized in that there is provided simultaneously at least one layer of resin with a very great tightness.

## Patentansprüche

1. Verfahren zum dichten Verschliessen von Verpackungen aus einem Schichtwerkstoff mit mindestens zwei an beiden Seiten eines Kartons (2) angeordneten Schichten aus einem Thermoplasten (1, 3), der zunächst zur Bildung eines Zuschnitts gefalzt und anschliessend an den Enden zur Bildung eines Bodens (8) und einer Öffnung (9) gefaltet ist und mehrere Schichten aus imprägniertem Karton aufweist, dadurch gekennzeichnet, dass man durch Anwendung von Wärme und Druck einen Teil des die Innenfläche des thermoplastischen Kartons überziehenden Thermoplasten derart fliessfähig erweicht, dass der Thermoplast die verbleibenden Zwischenräume am Ende des übereinanderliegenden Kartons ausfüllt, wobei die Fliessbewegung mittels Rippen (26, 28) erzeugt wird, die in den Schweissbacken (24, 25) vorgesehen sind, welche die Verschweissung der miteinander in Kontakt stehenden gefalteten Teile des Kartons bewirken und die zum Verschweissen und Stanzen dienenden Schweissbacken (24, 25) den durch die jeweilige Anzahl der übereinanderliegenden gefalteten Kartonschichten unterschiedlichen Wandstärken entsprechend angepasst sind.

2. Verfahren nach Anspruch 1, dadurch gekennzeichnet, dass die Bereiche mit einer grösse-

7 **0 094 888** 8

ren Anzahl übereinanderliegenden Kartonschichten durch die Schweissbacken eingeprägt werden, bevor und während diese den Schweissdruck ausüben.

3. Verfahren nach einem der Ansprüche 1 und 2, dadurch gekennzeichnet, dass beim Falten des Oberteils (9), dessen zwei Seiten (17, 18) V-förmig gefaltet sind und unter Abgrenzung zweier miteinander fluchtender Sätze von Streifen (19, 20) bis zum tatsächlichen Kontakt aneinander angenähert werden, einerseits die beiden miteinander fluchtenden Streifen (19, 20) über ihre gesamte Länge eingeprägt und andererseits die den beiden Streifen benachbarten Bereiche durch entsprechende Rippen (28) gestanzt werden, wobei die Stanzung in der Nähe des Zwischenraums (21), der das Ende der Streifen trennt, erfolgt, so dass der Thermoplast in diesen Zwischenraum sowie in den Zwischenraum (22, 22a) über dem Aussenrand der Streifen unter den beiden miteinander verbundenen Lappen (10, 11) fliesst, die an den Frontseiten der Verpackung abgegrenzt sind.

4. Verfahren nach einem der Ansprüche 1 bis 3, gekennzeichnet durch die Verwendung eines schichtförmigen Werkstoffs mit in Aufeinanderfolge einer Schicht aus thermoplastischem Kunststoff (1), einer Kartonschicht (2), einer Schicht aus thermoplastischem Kunststoff (3), einer Metallschicht (4) und einer Schicht aus thermoplastischem Kunststoff (5).

5. Verfahren nach einem der Ansprüche 1 bis 4, dadurch gekennzeichnet, dass die Schichten aus thermoplastischem Kunststoff aus Polyäthylen bestehen.

6. Verfahren nach einem der Ansprüche 1 bis 5, dadurch gekennzeichnet, dass die Metallschicht aus Aluminium besteht.

7. Verfahren nach einem der Ansprüche 1 bis 6, dadurch gekennzeichnet, dass zugleich mindestens eine Kunstharzschicht von erhöhter Dichtheit vorgesehen ist.

Fig.1

Fig.2

Fig.3

Fig.4

# Fig.5

# Fig.6

# Fig.7

## Fig. 8

## Fig. 10

## Fig. 9